# EUROPEAN PATENT APPLICATION

(11) **EP 1 526 603 A1**
(43) Date of publication of application: **27.04.2005**
(21) Application number: 04025158.9
(22) Date of filing: 22.10.2004
(51) Int. Cl.: H01Q 1/24, H04B 1/38

(54) **Anti-radiation electroconductive screen assembly for hand-held and cellular phones**

(30) Priority: 23.10.2003 IT mi20032080
(71) Applicant: Ditta Egidio Broggi S.n.c., 20136 Milano (IT)
(72) Inventor: Broggi, Egidio, 20136 Milano (IT)
(74) Representative: Cicogna, Franco

(57) **Abstract**

An anti-radiation electroconductive screen assembly, specifically designed for hand-held and cellular phones and the like, comprises a front side (2) facing the user of the phone and an opposite rear side (3), the user facing front side (2) being impermeable to electromagnetic radiations, and the opposite rear side (3) being at least partially permeable to said electromagnetic radiation.

## Description

### BACKGROUND OF THE INVENTION

The present invention relates to an anti-radiation casing construction, specifically designed for hand-held phones, cellular phones or the like.

As is known, possible damages to a human body by emitted electromagnetic waves, in particular generated by cellular phones, have been recently extensively searched.

To overcome any possible damage related to the emitted electromagnetic waves, a lot of different solutions, much or more efficient, have been proposed for reducing or preventing any negative effects on the human brain as a cellular phone is used near the hair of a user.

### SUMMARY OF THE INVENTION

Accordingly, the aim of the present invention is to provide such an anti-radiation screening construction or assembly adapted to reduce any irradiations directed to the body of a cellular phone user.

Within the scope of the above mentioned aim, a main object of the invention is to provide such a screen or screening assembly which can be used on any types of cellular phones.

Another object of the invention is to provide such a screen assembly which is very simple construction-wise and does not require any major modifications to the phone set.

Yet another object of the present invention is to provide such a screen assembly which is also aesthetically pleasant.

According to one aspect of the present invention, the above mentioned aim and objects, as well as yet other objects, which will become more apparent hereinafter, are achieved by an anti-radiation electroconductive screen assembly, made of a metal material or other materials, specifically designed for hand-held phones, cellular phones or the like, characterized in that said anti-radiation assembly comprises a front side facing a user of a phone set, and an opposite rear side, said user facing front side being impermeable to electromagnetic radiations, and the opposite rear side being at least partially permeable to said electromagnetic radiation.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:
Figure 1 is a front exploded perspective view of the anti-radiation screen assembly according to the present invention;
Figure 2 is a rear perspective view of the inventive screen assembly;
Figure 3 is a front exploded perspective view of the anti-radiation screen assembly, according to a further aspect of the present invention; and
Figure 4 is a rear perspective view of the screen assembly shown in figure 3.

### DESCRIPTION OF THE PREFERRED EMBODIMENT

With reference to the number references of the above mentioned figures, the anti-radiation screen assembly, made of electroconductive metal materials or other electroconductive materials, according to the present invention, and generally indicated by the reference number 1, comprises a front half-shell 2 and a rear half-shell 3 which are applied, in a per se known manner, to the body of a cellular phone, not shown in the figures.

More specifically, the front half-shell 2 forms the user facing side and typically comprises a keypad 4 and a display screen 5.

According to the invention, the front half-shell 2 is made of a material impermeable to the electromagnetic radiation such as, for example, an electroconductive metal material or other electroconductive materials.

To allow the front half-shell 2 to provide an efficient protection, the screen 5 can comprise a specifically designed metal protective grid or mesh, impermeable to the electromagnetic radiation, as is per se known in the art.

According to the invention, the rear half-shell 3 is at least partially permeable to the electromagnetic radiation, to allow electromagnetic signals to be transmitted and received.

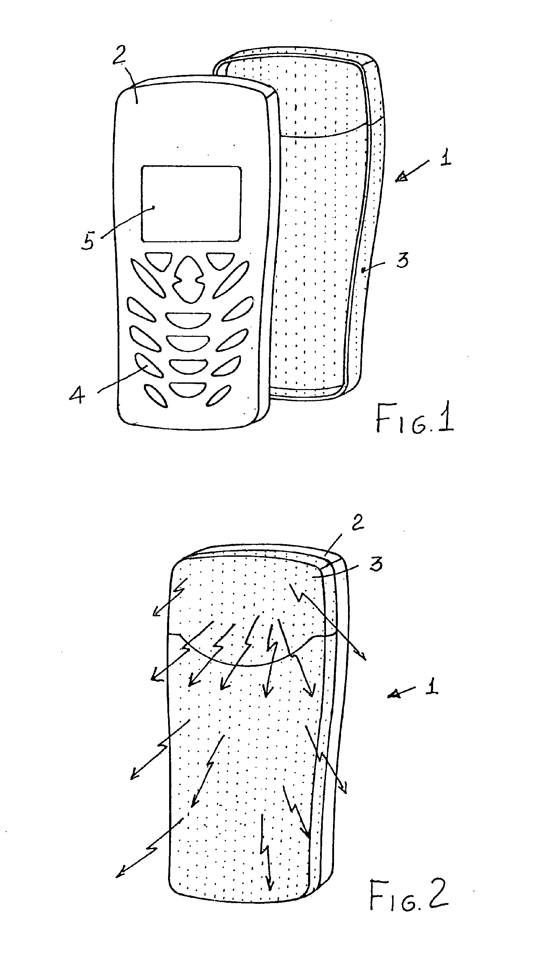

According to an embodiment of the invention shown in figures 1 and 2, the rear half-shell can be fully permeable to the electromagnetic radiation and can comprise the original rear half-shell of the cellular phone.

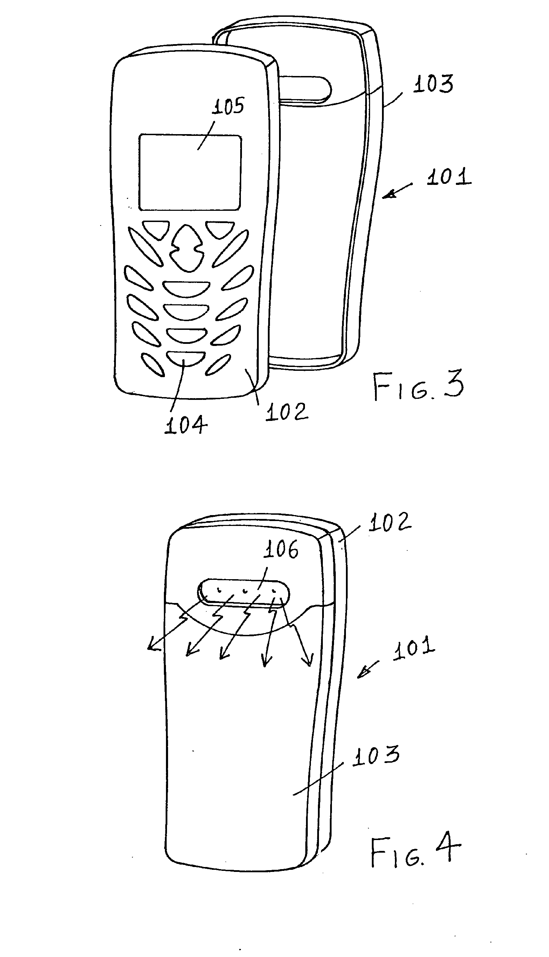

According to a further aspect of the invention, the casing construction, generally indicated by the reference number 101 in figures 3 and 4, comprises a front half-shell 102 and a rear half-shell 103, which can be applied either in the phone making method, or as a coating to be applied after the making of the phone, in a per se known manner, to the body of a cellular phone, not specifically shown in further details.

The front half-shell 102 forms the user facing side of the assembly, and typically comprises a keypad 104 and a display screen 105.

According to the invention, likewise to the embodiment shown in figures 1 and 2, the front half-shell 102 is made of a material impermeable to the electromagnetic radiation, such as, for example, an elecroconductive metal material or other electroconductive materials.

To provide a full and efficient protection against the electromagnetic radiation of the front half-shell 102, the display screen 105 can be coated by a specifically designed metal grid or mesh, impermeable to the electromagnetic radiation, of a per se known construction.

According to the invention, the rear half-shell 103 is made of a material impermeable to the electromagnetic radiation, such as, for example, a metal material, likewise to the front half-shell 102, but it is constructed partially permeable to said electromagnetic radiation through a small window 106, which can be advantageously arranged in a more favorable position with respect to the location of the antenna or array arranged inside the phone body, thereby aiding in receiving and transmitting the electromagnetic signals.

As it should be apparent from the above disclosure, as the phone is used near the hair of a user, the front screen assembly will prevent electromagnetic radiation from impinging against the user head.

On the other hand, a proper receiving and transmitting of the phone signals is assured by the permeability of the rear half-shell, in the case of the embodiment shown in figures 1 and 2, or by the rear window 106, in the case of the embodiment shown in figures 3 and 4.

According to a particularly advantageous aspect of the present invention, the material used for forming the above mentioned half-shells can be a precious metal, such as, for example, silver.

The provision of said screen assembly, in addition to solving the protection problems from electromagnetic radiation, also provide the hand-held phone with very good aesthetic properties.

Actually, as is known, a lot of commercially available cellular phones provides a user the possibility of replacing their original or starting casing with colored or decorated casings, and the present invention can exploit such a possibility, by providing a phone casing operating as a screening assembly which is aesthetically very pleasant and, in addition, providing very good operating features.

It has been found that the invention fully achieves the intended aim and objects, since it provides an anti-radiation electroconductive screen assembly made of electroconductive metal or other electroconductive materials, adapted to greatly reduce or eliminate the radiation directed to the body of a user using a cellular phone.

In this connection it should be pointed out that such a screening assembly, for cellular phones, can be made:
1. by providing the outer part of the cellular phone either fully or partially of a metal material or a like material;
2. by overlapping on or coating the starting structure of the cellular phone by a cover assembly, according to the disclosures thereinbelow provided.

More specifically, the screen assembly according to the present invention can be used in several electromagnetic applications, since it is of a bivalent nature:
1. for preventing damaging waves from exiting the apparatus or set:
2. for preventing electromagnetic noise from entering the apparatus, which electromagnetic noise could negatively affect a proper operation of the apparatus or frequencies used therein.

It should be moreover apparent that the used materials, as well as the contingent size and shapes, can be any, depending on requirements and the status of the art.

## Claims

1. An electroconductive anti-radiation screen assembly, specifically designed for hand-held phones, cellular phones or the like, **characterized in that** said screen assembly comprises a front side facing an user using said phone and an opposite rear side, said user facing front side being impermeable to electromagnetic radiations, whereas the opposite rear side is at least partially permeable to said electromagnetic radiation.

2. A screen assembly, according to claim 1, **characterized in that** said front side or half-shell comprises a keypad and a display screen also made impermeable to said electromagnetic radiation.

3. A screen assembly, according to claim 2, **characterized in that** the front half-shell comprises a display screen including or coated by a metal protective grid, impermeable to said electromagnetic radiation.

4. A screen assembly, according to one or more of the preceding claims, **characterized in that** said rear side or half-shell is fully permeable to said electromagnetic radiation and can comprise the original or starting rear half-shell of said cellular phone.

5. A screen assembly, according to one or more of the preceding claims, **characterized in that** said rear side or half-shell is made of a material impermeable to said electromagnetic radiation, but being made partially permeable to said electromagnetic radiation through a window.

6. A screen assembly, according to one or more of the preceding claims, **characterized in that** said window is arranged at a position more favorable than the location of an antenna arranged inside a body of the phone, thereby aiding in receiving and transmitting electromagnetic signals.

7. A screen assembly, according to one or more of the preceding claims, **characterized in that** said material impermeable to said electromagnetic radiation forming said half-shells is a metal material.

8. A screen assembly, according to one or more of the preceding claims, **characterized in that** said material impermeable to said electromagnetic radiation forming said half-shells is a precious metal or alloy.

9. A screen assembly, according to one or more of the preceding claims, **characterized in that** said material impermeable to said electromagnetic radiation forming said half-shells is silver.

10. A screen assembly, according to one or more of the preceding claims, **characterized in that** said material impermeable to said electromagnetic radiation forming said half-shells is an electroconductive material.
